# EUROPÄISCHE PATENTSCHRIFT

(11) **EP 3 589 535 B1**
(45) Veröffentlichungstag und Bekanntmachung des Hinweises auf die Patenterteilung: **10.03.2021**
(21) Anmeldenummer: 18704866.5
(22) Anmeldetag: 18.01.2018
(51) Int. Cl.: B62D 55/24, B62D 55/253, B62D 55/28

(54) **FAHRWERKKETTE, INSBESONDERE BOGIE-KETTE**
CHASSIS CHAIN, IN PARTICULAR BOGIE CHAIN
CHENILLE DE CHÂSSIS, NOTAMMENT CHENILLE DE BOGIE

(30) Priorität: 02.03.2017 DE 102017203363
(43) Veröffentlichungstag der Anmeldung: 08.01.2020
(73) Patentinhaber: ContiTech Transportbandsysteme GmbH, 30165 Hannover (DE)
(72) Erfinder: BEHRENS, Carsten, 37434 Bilshausen (DE); KLUTH, Olaf, 30419 Hannover (DE)
(74) Vertreter: Continental Corporation
(86) Internationale Anmeldenummer: PCT/EP2018/051141
(87) Internationale Veröffentlichungsnummer: WO 2018/157993

(56) Entgegenhaltungen:
- EP-A1- 2 857 295
- EP-A2- 0 251 255
- DE-U- 7 011 002
- FR-A- 1 181 920
- US-A- 2 345 763

## Beschreibung

Die vorliegende Erfindung betrifft eine Fahrwerkkette, insbesondere eine Bogie-Kette, gemäß dem Oberbegriff des Anspruchs 1.

Auf verschiedenen Gebieten werden Landfahrzeuge eingesetzt, welche sich nicht direkt auf Rädern auf dem Untergrund bewegen, sondern dies über Ketten, Bänder und dergleichen tun. Mit anderen Worten werden die Räder, Kränze, Rollen und dergleichen des Landfahrzeugs rotatorisch angetrieben und rollen von innen auf einer Kette etc. ab bzw. treiben diese an, welche ihrerseits mit ihrer Außenseite auf dem Untergrund aufliegt. Auf diese Weise kann das Landfahrzeug eine translatorische Bewegung auf dem Untergrund ausführen. Derartige Antriebe finden z.B. in der Landwirtschaft, in der Forstwirtschaft, im Bergbau und im Baugewerbe sowie beim Militär Anwendung.

In der Forstwirtschaft sind dabei besondere Bänder bekannt, welche als Bogie-Bänder oder als Bogie-Ketten bezeichnet werden. Diese Bogie-Bänder oder Bogie-Ketten werden um die üblicherweise zwei bis drei Räder eines Landfahrzeugs herum angeordnet. Die Räder sind üblicherweise Gummiluftreifen. Ein derartiges Bogie-Band mit einem entsprechenden Landfahrzeug für die Forstwirtschaft ist z.B. aus der EP 2 195 228 B1 bekannt.

Eine "klassische" Bogie-Kette besteht üblicherweise aus zwei Zugketten, welche in Umfangsrichtung, in Laufrichtung bzw. in Längsrichtung endlos geschlossen sind. Die beiden Zugketten sind durch quer zur Laufrichtung orientierten Profil-Verbindungselementen feststehend miteinander verbunden, wobei die Profil-Verbindungselemente in Laufrichtung zueinander beabstandet sind. Die Profil-Verbindungselemente ragen dabei in der Breite bzw. in der Querrichtung über die Breite der Räder hinaus und umgreifen diese seitlich nach innen gerichtet, so dass die Bogie-Kette seitlich auf den Reifen gehalten werden kann. Die Profil-Verbindungselemente sind üblicherweise solide und quersteif ausgebildet, um der Bogie-Kette in der Breite eine ausreichende Steifigkeit zu geben und die Bogie-Kette im Betrieb seitlich auf den Reifen zu halten. Auf diese Art und Weise hüllt die endlose Bogie-Kette die Räder im Betrieb sowohl seitlich teilweise als auch in Laufrichtung vollständig ein, so dass die Räder beim Vortrieb innerhalb der Kette teils auf dem Untergrund, teils auf den Profil-Verbindungselemente abrollen können.

Hierbei erhöhen die Querelemente die mechanische Verklammerung mit dem Untergrund, sodass ein größeres Vortriebsmoment auf nassem und bzw. oder weichem Untergrund gegenüber einer klassischen Reifenpaarung erreicht werden kann (Traktionserhöhung). Seitliche Führungselemente und bzw. oder mittige Führungselemente z.B. für den Fall einer Mehrfachbereifung, welche üblicherweise aus einem Metallkörper, aus einem Elastomerwerkstoff oder aus Kombinationen hiervon bestehen, halten die Kette im Betrieb in der Spur.

Derartige Antriebe werden in der Forstwirtschaft z.B. bei Holz-Erntemaschinen eingesetzt, welche z.B. als Tragschlepper, Forwarder, Rückmaschinen und dergleichen bezeichnet werden können.

Nachteilig bei derartigen Bogie-Ketten ist, dass die Bogie-Kette im Bereich zwischen den Rädern zwar auf dem Untergrund aufliegen kann, jedoch in sich zu wenig Steifigkeit besitzt, als dass über diese Zwischenräume Kräfte auf den Untergrund übertragen werden könnten. Somit vergrößert sich die effektive Aufstandsfläche durch die Verwendung einer derartigen Bogie-Kette nur geringfügig.

Als eine Weiterentwicklung der zuvor beschriebenen klassischen Bogie-Kette ist der Einsatz einer sog. rückensteifen Bogie-Kette zu sehen, welche als Profil-Verbindungselemente rückensteife vollflächige Stahlsegmentketten wie z.B. Stahl-Hohlprofilen aufweist, welche mittels Gelenken untereinander verbunden sind. Der Drehpunkt der Kettengelenke liegt hierbei oberhalb der Profilsegmente in der Innenseite der Kette, d.h. ist der Lauffläche der Räder zugewandt.

Vorteilhaft ist hierbei, dass aufgrund der Anordnung der Gelenke, welche lediglich eine Biegerichtung besitzen, die Zwischenräume der Bogie-Kette zwischen den Rädern eher als effektive Aufstandsfläche genutzt werden können als bei der klassischen Bogie-Kette. Die durch eine rückensteife Bogie-Kette erreichte größere Aufstandsfläche erzeugt im Vergleich zu einer zuvor beschriebenen Bogie-Kette eine größere effektive Aufstandsfläche und bewirkt hierdurch eine geringere Bodenverdichtung bei gleichzeitiger weiterer Verbesserung der möglichen Traktion auf weichen und viskosen Untergründen. Auch kann hierdurch bei gleicher Antriebsleistung ein größerer Vortrieb erzeugt werden. Als zusätzlicher positiver Nebeneffekt ist auch die sich hierdurch ergebende höhere Tragleistung je Achse auf Grund der größeren Aufstandsfläche je Achse zu erwähnen, welche insbesondere auf ungünstigen Bodenverhältnissen zum Tragen kommen kann. Hiermit geht auch ein höherer Nutzungsgrad bei extrem feuchten Wetterbedingungen einher, bei denen Radfahrwerke wie auch Bogie-Fahrwerke mit zuvor beschriebener Bogie-Kette bisher nicht eingesetzt werden konnten.

Sowohl die zuvor beschriebenen klassischen Bogie-Ketten als auch die rückensteifen Bogie-Ketten sind hierbei entweder als bereits endlos geschlossene Ketten dauerhaft fest mit dem Bogie-Reifenfahrwerk verbunden, was einen erheblichen Trennaufwand des Verbindungsscharniers z.B. zum Austausch der Bogie-Kette bedeuten kann, oder aber die klassischen Bogie-Ketten sind Vorort am Fahrzeug unter Zuhilfenahme von üblicherweise entsprechend schwerem Werkzeug mit Gelenkverbindern endlos zu schließen. Die rückensteifen Bogie-Ketten sind entsprechend über eines ihrer Gelenke endlos zu schließen.

Die rauen Einsatzbedingungen derartiger Bogie-Ketten fordern eine äußerst solide Ausführung. Aus diesem Grund sind alle Komponenten derartiger Bogie-Ketten üblicherweise aus hochfesten Werkstoffen wie zumeist Stahl gefertigt.

Ein Nachteil sowohl der klassischen Bogie-Kette als auch der rückensteifen Bogie-Kette besteht darin, dass die Vielzahl an Kettengelenken ein hohes Verschleißrisiko darstellt. Bei einem üblichen mehrjährigen Einsatz ist auch das Thema Korrosion zu beachten und ein hierdurch bedingtes "Festfressen" eines Kettengelenks als deutliche Schwäche derartiger Bogie-Ketten zu verstehen, da jedes festsitzende Gelenk den Umlaufwiderstand der einzelnen Kettenelemente an sich erhöht und somit zu einem Anstieg des Kraftstoffverbrauchs führt. Soll dieses vermieden werden, so ist mit einem erhöhtem regelmäßigen Wartungs- und Schmieraufwand zu rechnen, welcher jedoch zur Belastung der Umwelt führen und daher aus Gründen des Umweltschutzes möglichst zu vermeiden ist.

Nachteilig ist weiterhin, dass sich durch das allmähliche Ausschlagen der Kettengelenke eine Ausweitung der Kettengelenke durch ein sich hierdurch hervorgerufenes Gelenkspiel ergeben kann, welches zu einer Längung der Bogie-Kette in der Laufrichtung führen kann. Dieses verschleißbedingte zusätzliche Spiel im Gelenk führt dazu, dass der Abstand zwischen zwei quer zur Laufrichtung orientierten Profil-Verbindungselementen allmählich erhöht wird und die Durchbiegung in der Laufrichtung deutlich zunimmt. Die entsprechende Aufstandsfläche der Bogie-Kette zwischen den Rädern wird somit reduziert und neben dem sich ergebenden Verschleiß wird auch die erzeugte Bodenkompression des Fahrwerks gegenüber einer neuen Bogie-Kette erhöht.

Nachteilig ist ferner, dass unter den feuchten Bedingungen, welchen Bogie-Ketten im Betrieb üblicherweise ausgesetzt sind, die Reibpaarung von Bogie-Kette aus z.B. Stahl und Rädern aus üblicherweise Gummi als eher ungünstig zu betrachten ist, weil dies leicht zu Schlupf des Antriebsrades innerhalb der Bogie-Kette führen kann. Dies gilt insbesondere bei entsprechender Verschmutzung.

Die DE 29 33 633 A1 beschreibt eine Raupe für geländegängige Fahrzeuge und Maschinen, vorzugsweise für die Forst- und Landwirtschaft, die über Räder angetrieben werden soll. Die Raupe weist mindestens zwei mit Abstand zueinander und parallel verlaufende in Längsrichtung sich erstreckende Zugelemente aus Stahlmaterial auf Die Raupe weist ferner diese Zugelemente verbindende Raupenplatten mit je einem Stahlrahmen auf. Jede Raupenplatte weist an ihrer nach außen gewandten Seite des Stahlrahmens ein Kissen aus elastomerem Material auf, welches den Stahlrahmen abdeckt. Die mit den Raupenplatten verbundenen Zugelemente zwischen den Raupenplatten bestehen aus Gelenkelementen, welche miteinander gelenkig verbunden sind. Die Gelenke sind jeweils an der dem Kissen abgewandten Seite der Raupenplatten angeordnet und mittels einer Bolzenverbindung gelenkig miteinander verbunden.

Die EP 2 275 325 A2 beschreibt eine endlos geschlossene Kette für ein geländegängiges Fahrzeug wie z.B. für ein Fahrzeug für die Forstwirtschaft. Das Fahrzeug weist einen Antrieb auf, welcher seine Leistung über einen Antriebsstrang über zwei Antriebsräder auf die Kette übertragen kann. Die Antriebsräder laufen auf der inneren Seite der Kette. Mit der äußeren Seite der Kette liegt diese auf einem Untergrund auf. Die Kette besteht aus einer Mehrzahl von Kettensektionen, welche untereinander mittels jeweils eines Gelenks gelenkig verbunden sind. Die Kettensektionen weisen jeweils einen elastomeren Grundkörper auf, an dessen Enden in der Laufrichtung die Verbindungselemente der Gelenke angeordnet sind. In den Grundkörpern ist jeweils eine Mehrzahl von Verstärkungselementen eingebettet. Zu den Verstärkungselementen gehört eine Mehrzahl von Verstärkungskabeln, welche sich einander benachbart in der Laufrichtung erstrecken, um die Zugkraft der endlos geschlossenen Kette zu erhöhen. Weitere Verstärkungselemente in Form von Gewebelagen sind ferner vorhanden. Die äußere Seite der Kette, welche dem Untergrund zugewandt ist, weist eine Mehrzahl von Profilelementen auf, welche der Verstärkung der Haftung dienen und einstückig mit dem elastomeren Grundkörper ausgebildet sind.

Nachteilig ist bei der Raupe der DE 29 33 633 A1 sowie bei der Kette der EP 2 275 325 A2, dass die Zugelemente bzw. Kettensektionen jeweils untereinander mit metallischen Gelenken verbunden sind, welche die zuvor beschriebenen Nachteile des Verschleißes, der Korrosion sowie des Festfressens aufweisen können. Insbesondere kann jeweils das Ausschlagen der Gelenke zu einer Aufweitung der Raupe bzw. der Kette führen, welcher zu einer deutlichen Durchbiegung der Raupe bzw. der Kette zwischen den Rädern des Antriebs des Fahrzeugs führen kann. Dies bedeutet eine deutlich verminderte Traglast der Raupe bzw. der Kette zwischen den Rädern.

Die WO 2012 142 705 A1 beschreibt eine endlos geschlossene Kette zur Verwendung bei einem Kettenfahrzeug wie z.B. einem Fahrzeug für die Forstwirtschaft. Die Kette besteht aus einzelnen Kettensegmenten, welche in der Längsrichtung bzw. in der Laufrichtung endlos geschlossen sind. Jedes Kettensegment weist ein verstärktes elastomeres Material auf. An jedem Ende jedes Kettensegments in der Längsrichtung bzw. in der Laufrichtung ist ein Verbindungselement angeordnet, so dass die Kettensegment in der Längsrichtung bzw. in der Laufrichtung gelenklos verbunden werden können, um die Kettensegmente zu einer endlos geschlossenen Kette zu schließen. Zur Verstärkung der Kettensegmente sind sich in Längsrichtung erstreckende Verstärkungselemente wie z.B. Kabel vorgesehen, welche sich zwischen den jeweiligen Verbindungselementen erstrecken und mit diesen verbunden sind. Auf der Außenseite, welche dem Untergrund zugewandt ist, weisen die Kettensegmente eine elastomere Profilierung auf, welche einstückig mit dem jeweiligen elastomeren Kettensegment ausgebildet ist. Auf der Innenseite, welche dem Untergrund abgewandt ist, weisen die Kettensegmente mittig in der Querrichtung jeweils nach innen ragende elastomere Zähne auf, welche einstückig mit dem jeweiligen elastomeren Kettensegment ausgebildet sind und dem Eingriff eines Antriebsrades des Fahrwerks des Fahrzeugs dient.

Nachteilig ist auch bei der elastomeren Kette der WO 2012 142 705 A1, dass eine deutliche Durchbiegung der Ketten zwischen den Rädern des Antriebs des Fahrzeugs auftreten kann. Zwar kann durch die Verstärkung innerhalb des elastomeren Material der Kette zur Übertragung von Zugkräften in der Längsrichtung bzw. in der Laufrichtung eine gewisse Stabilität erreicht werden. Auch können durch die Vermeidung von Gelenken deren zuvor beschriebene Nachteile vermieden werden. Jedoch kann hierdurch eine Durchbiegung der Ketten zwischen den Rädern des Antriebs des Fahrzeugs gar nicht vermieden werden, so dass dieser Nachteil der Raupe der DE 29 33 633 A1 sowie der Kette der EP 2 275 325 A2 auch bei der Verwendung einer verstärkten elastomeren Kette erhalten bleibt

Dokument US 2 345 763 A offenbart den Oberbegriff des Anspruchs 1.

Die EP 0 251 255 A2, FR 1 181 920 A und DE 70 11 002 U zeigen weitere relevante Beispiele aus dem Stand der Technik.

Eine Aufgabe der vorliegenden Erfindung ist es, eine Fahrwerkkette, insbesondere eine Bogie-Kette, der eingangs beschriebenen Art bereit zu stellen, so dass eine Durchbiegung der Fahrwerkkette besser als bisher bekannt vermieden werden kann. Insbesondere soll die wirksame Auflagefläche zwischen den Rädern, Rollen etc. des Fahrwerks erhöht werden. Zumindest soll eine Alternative zu bekannten Fahrwerkketten geschaffen werden.

Die Aufgabe wird erfindungsgemäß durch eine Fahrwerkkette mit den Merkmalen gemäß Anspruch 1 gelöst. Vorteilhafte Weiterbildungen sind in den Unteransprüchen beschrieben. Somit betrifft die vorliegende Erfindung eine Fahrwerkkette, insbesondere eine Bogie-Kette, mit einem flexiblen Körper, welcher vorzugsweise ein elastomerer Körper ist. Der flexible Körper ist entweder bereits in einer Laufrichtung endlos geschlossen oder der flexible Körper ist z.B. durch ein Schloss endlos schließbar. Die Fahrwerkkette kann bei verschiedenen Fahrzeugen der Landwirtschaft, der Forstwirtschaft, des Baugewerbes, des Bergbaus sowie des Militär und anderswo verwendet werden, wo Vollketten- oder Halbkettenfahrzeuge oder sonstige Kettenfahrzeuge eingesetzt werden können. Hierzu gehören alle geländegängigen Fahrzeuge. Auch gehören in der Forstwirtschaft die Fahrzeuge hierzu, welche mit Bogie-Ketten oder Bogie-Bändern eingesetzt werden.

Die erfindungsgemäße Fahrwerkkette ist durch eine Mehrzahl von starren Querelementen gekennzeichnet, welche mit der Außenseite des flexiblen Körpers verbunden sind und sich im Wesentlichen quer zur Laufrichtung erstrecken, wobei zumindest ein Teil der starren Querelemente in Laufrichtung derart nahe aneinander angeordnet sind, dass sich zwei unmittelbar benachbarte starre Querelemente bei einer flächigen Erstreckung des flexiblen Körpers in der Laufrichtung berühren. Mit anderen Worten bewirken die starren Querelemente nicht nur eine Versteifung der Fahrwerkkette in der Querrichtung sondern sind derart ausgebildet und angeordnet, dass sie dann, wenn sich die Fahrwerkkette flächig erstreckt, durch ihren Kontakt untereinander zu einer starren und festen Auflagefläche in der Laufrichtung führen können. Die starren Querelemente sind somit derart eng aneinander angeordnet, dass falls sich der flexible Körper zwischen den Rädern oder dergleichen nach innen durchbiegen möchte, die starren Querelemente in Laufrichtung aneinanderstoßen und somit die Durchbiegung nach innen verhindern.

Auf diese Weise kann erfindungsgemäß dann, wenn die Fahrwerkkette auf einem Untergrund flächig aufliegt, in diesem Bereich zwischen den Rädern oder dergleichen wenigstens eine geringere Durchbiegung nach innen als bisher üblich erreicht oder sogar eine Durchbiegung nach innen vollkommen vermieden werden. Hierdurch kann die wirksame Auflagefläche zwischen den Rädern, Rollen etc. des Fahrwerks erhöht werden.

Dieser Effekt kann über den Umfang der Fahrwerkkette überall dort erreicht werden, wo entsprechende starre Querelemente entsprechend nahe aneinander angeordnet sind. Werden daher vorzugsweise derart starre Querelemente über den gesamten Umfang der Fahrwerkkette vorgesehen und alle starren Querelemente entsprechend nahe aneinander angeordnet, so können die zuvor beschriebenen Vorteile auch durchgehend erreicht werden. Die starren Querelemente können dabei formschlüssig, kraftschlüssig und bzw. oder stoffschlüssig mit dem flexiblen Körper derart verbunden sein, so dass sie um das Fahrwerk eines Fahrzeugs umlaufen und die zuvor beschriebene Auflagefläche in der Laufrichtung ausbilden können.

Den flexiblen Körper dabei als elastomeren Körper vorzusehen kann vorteilhaft sein, um eine bessere Haftung zwischen dem Fahrwerk eines entsprechenden Fahrzeugs und der Fahrwerkkette zu erreichen. Dies gilt insbesondere für Bogie-Ketten, welche Gummireifen als Räder bzw. als Fahrwerk aufweisen. In diesem Fall kann eine besonders gute Haftung zwischen der elastomeren Innenseite der Fahrwerkkette und den Gummireifen des Fahrwerks erreicht werden. Diese Haftung kann insbesondere deutlich besser sein als bei bisher bekannten Bogie-Ketten, welche üblicherweise metallisch ausgebildet sind und gerade bei Feuchtigkeit und Verschmutzung gegenüber Gummireifen eine deutlich geringere Haftung aufweisen können als eine elastomere Innenseite einer Fahrwerkkette. Wird ein elastomerer Körper als flexibler Körper verwendet, so ist dieser möglichst dehnungsarm auszubilden, um eine Berührung von zwei unmittelbar benachbarten starren Querelementen bei einer flächigen Erstreckung des flexiblen Körpers in der Laufrichtung zu ermöglichen. Mit anderen Worten ist der elastomere Körper derart auszubilden, dass Dehnungen in der Laufrichtung möglichst vermieden werden können, welche zu Abständen zwischen zwei unmittelbar benachbarten starren Querelementen führen und hierdurch deren Berührung verhindern könnten. Dies kann z.B. durch ein entsprechend dehnungsarmes Elastomermaterial erreicht werden. Zusätzlich werden auch Zugträger in der Laufrichtung verwendet , wie weiter unten noch näher ausgeführt wird.

Das Schloss kann ein Gelenk aufweisen oder als Gelenk ausgebildet sein, über welches der flexible Körper endlos geschlossen werden kann. Alternativ kann das Schloss als Verbindungselement auch gelenklos ausgebildet sein, so dass eine vollkommen gelenklose Fahrwerkkette geschaffen werden kann. Vorzugsweise kann das Schloss, ob als Gelenk oder als Verbindungselement ausgebildet, direkt unter einem Querelement angeordnet sein oder das Schloss kann als Bestandteil eines Querelements ausgebildet sein. Dies kann zu einer lückenlosen Anordnung der Querelemente führen.

Gemäß einem Aspekt der vorliegenden Erfindung ist zumindest ein Teil der starren Querelemente, vorzugsweise sind alle starren Querelemente, in Laufrichtung lückenlos aneinander gereiht mit der Außenseite des flexiblen Körpers verbunden. Mit anderen Worten sind die starren Querelemente spaltfrei, d.h. ohne Zwischenraum in der Laufrichtung, aneinander gereiht mit der Außenseite des flexiblen Körpers verbunden. Hierdurch kann eine derart enge Anordnung der starren Querelemente erreicht werden, dass eine Berührung untereinander bei flächiger Erstreckung erreicht werden kann.

Gemäß einem weiteren Aspekt der vorliegenden Erfindung sind die einzelnen starren Querelemente jeweils in der Laufrichtung derart kurz ausgebildet, dass die Fahrwerkkette um ein Fahrwerk eines Fahrzeugs herumgebogen werden kann. Hierdurch kann gleichzeitig erreicht werden, dass eine ausreichende Biegsamkeit der Fahrwerkkette gegeben bleibt, um z.B. an einem Rad oder dergleichen eine ausreichende Umlenkung der erfindungsgemäßen Fahrwerkkette zu erreichen, wie sie für den Betrieb einer Fahrwerckette erforderlich ist. Dabei können die starren Querelemente in der Laufrichtung auseinander klaffen, wenn der flexible Körper umgelenkt und gebogen wird, weil die starren Querelemente mit ihrer inneren Fläche mit der äußeren Seite des flexiblen Körpers verbunden sind. Dies kann die ausreichende Biegsamkeit der erfindungsgemäßen Fahrwerkkette ermöglichen, ohne die erfindungsgemäße Verringerung der Durchbiegung nach innen bei flächiger Auflage zu beeinflussen.

Gemäß einem weiteren Aspekt der vorliegenden Erfindung ist zumindest ein Teil der starren Querelemente, vorzugsweise sind alle starren Querelemente, stoffschlüssig, vorzugsweise durch Vulkanisation, mit der Außenseite des flexiblen Körpers verbunden. Hierdurch kann ein sicherer und dauerhafter Halt hergestellt werden. Wird diese stoffschlüssige Verbindung durch Vulkanisation erreicht, indem zumindest der flexible Körper ein elastomeres Material aufweist bzw. aus einem elastomeren Material besteht, so kann diese Verbindung während der Vulkanisation des flexiblen Körpers mit hergestellt werden, so dass auf weitere Montageschritte verzichtet werden kann.

Gemäß einem weiteren Aspekt der vorliegenden Erfindung ist zumindest ein Teil der starren Querelemente, vorzugsweise sind alle starren Querelemente, kraftschlüssig, vorzugsweise durch Bolzen, Nieten oder Schrauben, mit der Außenseite des flexiblen Körpers verbunden. Auf diese Weise kann ein sicherer Halt erreicht werden, welcher jedoch zerstörungsfrei lösbar sein kann. Dies kann vorteilhaft sein, falls z.B. ein beschädigtes oder verschlissenes starres Querelement ausgetauscht werden soll.

Gemäß einem weiteren Aspekt der vorliegenden Erfindung ist zumindest ein Teil der starren Querelemente, vorzugsweise sind alle starren Querelemente, formschlüssig, vorzugsweise durch Einschieben quer zur Laufrichtung, mit der Außenseite des flexiblen Körpers verbunden. Auf diese Weise kann ein einfacher Halt erreicht werden, welcher auch eine einfache und schnelle Austauschbarkeit der starren Elemente ermöglichen kann. Gemäß einem weiteren Aspekt der vorliegenden Erfindung kann die formschlüssige Verbindung durch ein Nut-Feder-System, vorzugsweise durch eine Schwalbenschwanzverzahnung, bewirkt werden, welches die Außenseite des flexiblen Körpers und die Innenseite des starren Querelements miteinander ausbilden. Hierdurch kann ein starres Querelement in der Querrichtung mit einem Feder- bzw. Schwalbenschwanzprofil in eine korrespondierende Nut der Außenseite des flexiblen Körpers eingeschoben und dort in der Laufrichtung formschlüssig und in der Querrichtung kraftschlüssig gehalten werden. Gleichzeitig kann der kraftschlüssige Halt des starren Querelements in der Querrichtung durch Kraft vergleichsweise einfach aufgehoben werden, um dieses zu entfernen.

Gemäß der vorliegenden Erfindung weist der flexible Körper wenigstens einen Zugträger, vorzugsweise eine Mehrzahl von Zugträgern, auf, welcher sich in der Laufrichtung erstreckt und mit dem flexiblen Körper in einer Laufrichtung endlos geschlossen oder endlos schließbar ist. Auf diese Weise können Zugkräfte in der Laufrichtung übertragen werden, so dass der flexible Körper von dieser Belastung entlastet werden kann. Durch eine Mehrzahl von Zugträgern kann diese Wirkung vervielfacht werden bzw. die gleiche Wirkung kann mit mehreren dünneren Zugträgern erreicht werden, welche vorzugsweise in der Querrichtung zueinander beabstandet und vorzugsweise gleichmäßig parallel zueinander verteilt angeordnet sein können, um die Kraftübertragung ebenfalls gleichmäßig zu verteilen. Hierbei den Zugträger vorzugsweise in ein elastomeres Material des flexiblen Körpers eingebettet vorzugsehen kann vorteilhaft sein, um eine möglichst gute Haftung und damit Kraftübertragung zwischen dem Zugträger und dem elastomeren Körper zu erreichen.

Gemäß einem weiteren Aspekt der vorliegenden Erfindung ist der Zugträger ein Seil, vorzugsweise ein Stahlseil, ein Glasfaserseil oder ein Aramidseil. Auf diese Weise kann eine sichere und langlebige Übertragung von Zugkräften erreicht werden. Die unterschiedlichen Materialien können dabei unterschiedliche Kosten, Haltbarkeiten und Querschnitte zur Übertragung der gleichen Zugkräfte aufweisen, so dass je nach Anwendungsfall bzw. Auswahlkriterium ein geeigneter Zugträger ausgewählt werden kann.

Gemäß einem weiteren Aspekt der vorliegenden Erfindung ist der Zugträger ein flächiges Gebilde, vorzugweise ein einlagiges oder mehrlagiges flächiges Gewebe, besonders vorzugsweise ein flächiges textiles Gewebe, welches vorzugsweise aus Stahl, aus Glasfaser, aus Kunstfaser, aus Naturfaser oder aus Aramidfaser oder aus einer Kombination hiervon besteht. Auch auf diese Art und Weise kann eine sichere Übertragung von Zugkräften erreicht werden, welche im Falle eines textilen Gewebes jedoch eher für geringere Zugkräfte geeignet ist als dies mit Seilen möglich ist. Als flächiges Gebilde kann jedoch auch ein dünnes Metallblech verwendet werden, welches eine vergleichbare Übertragung von Zugkräften wie mit Stahlseilen ermöglichen und aufgrund seiner dünnen Stärke ausreichend biegsam sein kann, um um ein Fahrwerk umlaufen zu können. Mittels eines flächigen Gebildes kann eine gleichmäßigere Übertragung von Zugkräften als mit Seilen erfolgen. Ferner kann die Anbindung des Zugträgers als Gewebe großflächiger als bei Seilen erfolgen.

Gemäß einem weiteren Aspekt der vorliegenden Erfindung ist der Zugträger über die gesamte Breite der Fahrwerkkette ausgebildet oder der Zugträger ist lediglich über einen Teil der Breite der Fahrwerkkette ausgebildet. Im ersten Fall kann eine möglichst gleichmäßige Verteilung der Kräfteübertragung über die gesamte Breite der Fahrwerkkette erreicht werden. Im zweiten Fall können Bereiche der Fahrwerkkette in der Querrichtung freigelassen werden, um dort z.B. Befestigungsmittel durch den flexiblen Körper hindurch anordnen zu können, ohne den Zugträger hierdurch zu beschädigen. Wird vorzugsweise wenigstens ein Randbereich in Querrichtung und werden besonders bevorzugt beide Randbereiche in Querrichtung frei von Zugträgern ausgebildet, so können z.B. gerade dort derartige Befestigungsmittel vorgesehen werden. Auch kann eine Beschädigung des Zugträgers durch Beschädigungen der Fahrwerkkette, welche von dessen Rändern in Querrichtung und insbesondere von dessen äußerem Rand in Querrichtung ausgehen können, so möglichst von den Zugträgern ferngehalten werden.

Gemäß einem weiteren Aspekt der vorliegenden Erfindung weist der flexible Körper auf seiner Innenseite zumindest abschnittsweise in Querrichtung und bzw. oder in Laufrichtung eine innere Profilierung auf. Auf diese Weise kann die Haftung zwischen der Innenseite der Fahrwerkkette und dem Fahrwerk eines entsprechenden Fahrzeugs verbessern werden. Dies gilt insbesondere für eine elastomere Innenseite der Fahrwerckette sowie Gummireifen des Fahrwerks. Hierbei kann es bereits vorteilhaft sein, einen Teilbereich der Innenseite des Fahrwerks mit einer inneren Profilierung zu versehen. Jedoch können die hierdurch bewirkten Vorteile umfangreicher genutzt werden, wenn diese innere Profilierung vollständig umlaufend in Laufrichtung vorgesehen wird.

Besonders vorteilhaft kann es dabei sein, die innere Profilierung einstückig mit einem elastomeren Material des flexiblen Körpers ausgebildet vorzusehen, weil die innere Profilierung dann bereits bei der Ausbildung und Vulkanisation des elastomeren Körpers mitausgebildet werden kann, so dass zusätzlich Herstellungs- und Montageschritte entfallen können. Insbesondere kann durch die Einstückigkeit der inneren Profilierung mit dem elastomeren Körper eine stabile Verbindung zwischen der inneren Profilierung und dem elastomeren Körper erreicht werden.

Gemäß einem weiteren Aspekt der vorliegenden Erfindung besteht wenigstens ein starres Querelemente, vorzugsweise bestehen alle starren Querelemente, aus Metall, vorzugsweise aus Aluminium oder Stahl, und bzw. oder wenigstens ein starres Querelemente weist, vorzugsweise alle starren Querelemente weisen, ein Metall, vorzugsweise Aluminium oder Stahl, oder einen glasfaserverstärkten Kunststoff auf, welcher zumindest abschnittsweise, vorzugsweise vollständig, in ein elastomeres Material eingebettet ist. Wird ein starres Querelement aus Metall ausgebildet, so kann dies vergleichsweise einfach in der Herstellung z.B. durch Umformen oder Urformen erfolgen. Auch kann ein sehr stabiles und robustes starres Querelement geschaffen werden, welches einen starken Eingriff in den Untergrund aufweisen kann. Hierbei hat Aluminium ein geringeres Gewicht bei jedoch erhöhten Kosten gegenüber Stahl. Wird ein starres Querelement aus mit elastomerem Material umgebenden Metall ausgebildet, kann ebenfalls eine hohe Stabilität des starren Querelements erreicht werden. Gleichzeitig kann jedoch durch die Ummantelung eine Korrosion des Metalls verhindern werden. Ferner kann ein elastischer Kontakt zum Untergrund erreicht werden, was z.B. eine betonierte Straße oder dergleichen schonen kann. Dabei können lediglich starre Querelemente einer zuvor beschriebenen Art bei einer Fahrwerkkette eingesetzt werden oder es können beide zuvor beschriebene Arten miteinander kombiniert eingesetzt werden. Hierdurch können die jeweiligen Eigenschaften und Vorteile je nach Anwendungsfall eingesetzt oder kombiniert werden.

Gemäß einem weiteren Aspekt der vorliegenden Erfindung weist wenigstens ein starres Querelemente, vorzugsweise weisen alle starren Querelemente, eine nach außen zeigende Aufnahme auf, welche ausgebildet ist, ein Profilelement aufzunehmen und kraftschlüssig und bzw. oder formschlüssig zu halten. Auf diese Weise können die starren Querelemente zur flächigen Versteifung der Fahrwerkkette verwendet und mit zusätzlichen Profilelementen kombiniert werden, um z.B. die Haftung auf dem Untergrund zu erhöhen oder auch um eine elastische Haftung auf dem Untergrund zu erreichen. Diese Profilelemente austauschbar vorzusehen hat zum einem den Vorteil, dass die Profilelemente je nach Anwendungsfall flexibel variiert werden können. Zum anderen können beschädigte oder verschlissene Profilelemente ausgetauscht werden. Dabei kann die Befestigung der Profilelemente z.B. durch Befestigungsmittel wie z.B. durch Schrauben erfolgen. Alternativ kann ein Profilelement jedoch auch in die Aufnahme des starren Querelements eingeklemmt werden und alleinig kraftschlüssig durch Klemmung gehalten werden. Dies kann die Montage und den Austausch vereinfachen und beschleunigen.

Gemäß einem weiteren Aspekt der vorliegenden Erfindung weist wenigstens ein starres Querelement, vorzugsweise weisen alle starren Querelemente, ein Profilelement auf, wobei das Profilelement entweder elastisch, vorzugsweise aus einem elastomeren Material, oder starr, vorzugsweise aus Metall, besonders bevorzugt aus Stahl oder Aluminium, oder aus glasfaserverstärktem Kunststoff, ausgebildet ist. Hierdurch können einige der zuvor bereits beschriebenen Vorteile erreicht werden.

Ein Ausführungsbeispiel und weitere Vorteile der Erfindung werden nachstehend im Zusammenhang mit den folgenden Figuren erläutert. Darin zeigt:

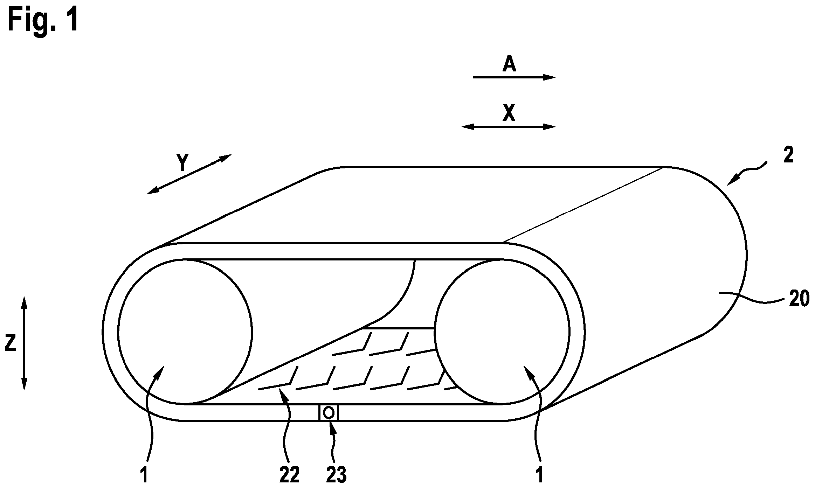

- Fig. 1: eine perspektivische schematische Darstellung einer erfindungsgemäßen Fahrwerkkette ohne starre Querelemente;

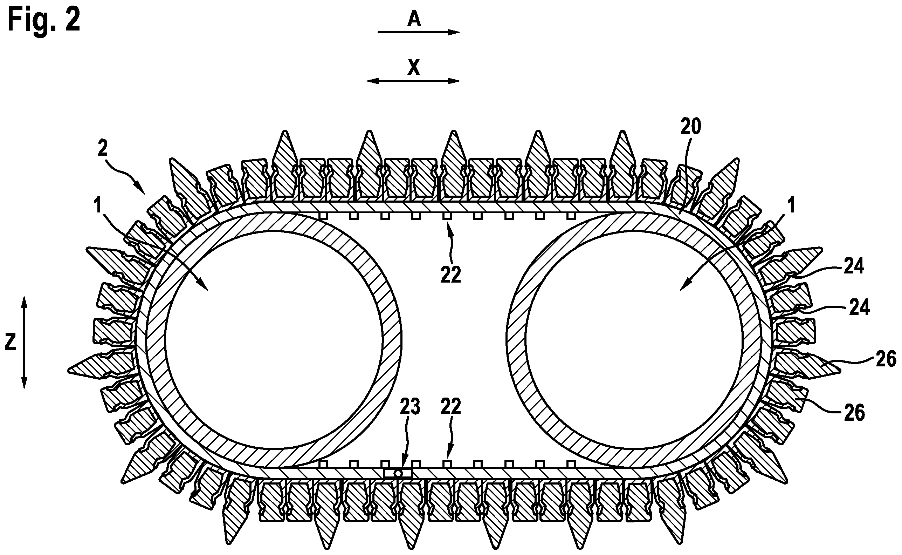

- Fig. 2: die Darstellung der Figur 1 im Querschnitt mit starren Querelementen;

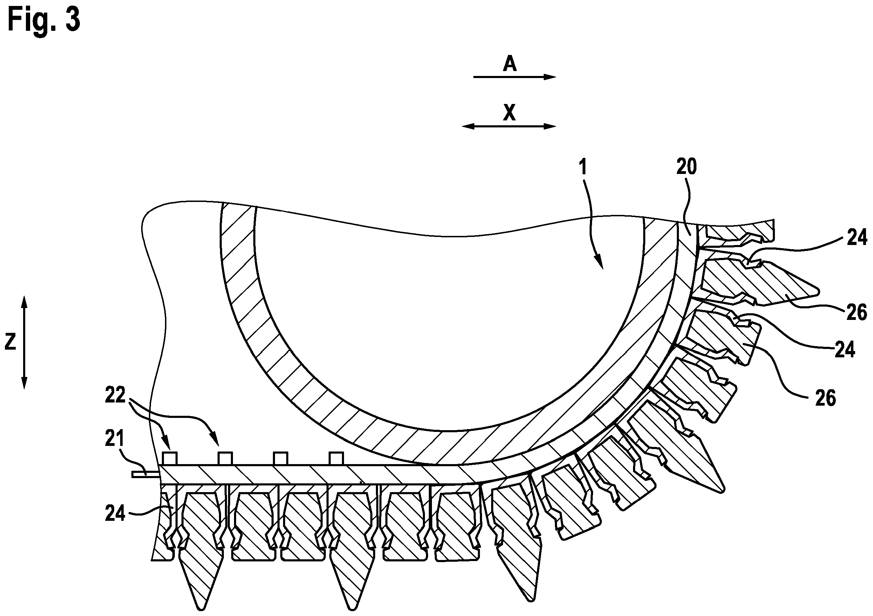

- Fig. 3: einen Ausschnitt der Fig. 2; und

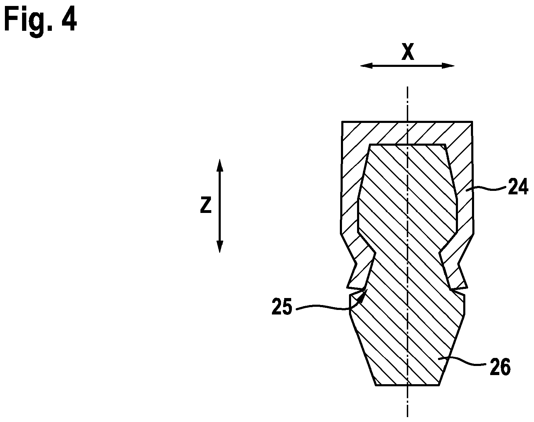

- Fig. 4: einen Querschnitt eines starren Querelements.

Die Beschreibung der o.g. Figuren erfolgt in kartesischen Koordinaten mit einer Längsrichtung X, einer zur Längsrichtung X senkrecht ausgerichteten Querrichtung Y, welche auch als Breite Y bezeichnet werden kann, sowie einer sowohl zur Längsrichtung X als auch zur Querrichtung Y senkrecht ausgerichteten vertikalen Richtung Z, welche auch als Höhe Z bezeichnet werden kann.

Eine erfindungsgemäße Fahrwerkkette 2 kann auch als Fahrwerkband 2 bezeichnet werden und ist vorzugsweise als Bogie-Kette 2 bzw. als Bogie-Band 2 ausgebildet, um die Gummireifen 1 eines Fahrwerks eine Forstfahrzeug herum verwendet zu werden. Die Bogie-Kette 2 ist in Umfangsrichtung bzw. in einer Laufrichtung A des Fahrzeugs endlos schließbar. Die Bogie-Kette 2 weist einen flexiblen Körper 20 auf, welcher aus einem elastomeren Material besteht, in welches eine Mehrzahl von Zugträgern 21 in Form von Stahlseilen 21 eingebettet ist. Die Stahlseile 21 verlaufen in der Laufrichtung A parallel zueinander und sind gleichmäßig zueinander in der Querrichtung Y beabstandet. Die Stahlseile 21 und der elastomere Körper 20 enden gemeinsam an beiden Enden in jeweils einem Endelement, über welche sich die Bogie-Kette 2 endlos schließen lässt. Die beiden Endelemente (nicht dargestellt) bilden dabei gemeinsam ein Verbindungselement 23, welches auch als Schloss 23 bezeichnet werden kann.

Auf seiner Innenseite, welche den Gummireifen 1 zugewandt ist, weist der elastomere Körper 20 eine innere Profilierung 22 auf, welche einstückig mit dem elastomeren Körper 20 als Erhebungen aus demselben elastomeren Material ausgebildet ist. Die innere Profilierung 22 ist in diesem Ausführungsbeispiel in zwei parallel zueinander verlaufende Reihen aus Winkelprofilen ausgebildet, wie sie z.B. bei Transportbändern üblich sind, um das Fördergut bei Steigungen besser zu halten. Alternativ wären auch innere Profilierungen 22 möglich, wie sie bei Gummireifen als Profile üblich sind. In jedem Fall kann hierdurch die Haftung zwischen der äußeren Oberflächen der Gummireifen 1 und der Innenseite der Bogie-Kette 2 verbessert werden.

Auf seiner Außenseite, welche den Gummireifen 1 abgewandt ist, weist der elastomere Körper 20 starre Querelemente 24 auf, welche sich jeweils in der Querrichtung Y erstrecken und in der Laufrichtung A eng aneinander gesetzt sind. Die starren Querelemente 24 sind jeweils mit ihrer Unterseite an der Außenseite des elastomeren Körpers 20 anvulkanisiert. Die starren Querelemente 24 sind jeweils als U-förmiges Profil aus Stahl ausgebildet und derart enganliegend auf der Außenseite des elastomeren Körpers 20 angeordnet, so dass sich die benachbarten starren Querelemente 24 dann gegenseitig berühren und gegeneinander abstützen, wenn dieser Bereich der Bogie-Kette 2 auf einem Untergrund horizontal aufliegt. Hierdurch kann die Ausbildung einer in der Laufrichtung A steifen Fläche erreicht werden, so dass eine Durchbiegung der Bogie-Kette 2 deutlich reduziert oder sogar vollständig verhindern und damit die effektive Auflagefläche vergrößert werden kann.

Durch die U-förmige Form der starren Querelemente 24 wird jeweils eine Aufnahme 25 geschaffen, welche in der Querrichtung Y verläuft und nach außen hin sich federnd verengend ausgebildet ist. Auf diese Weise kann jeweils ein Profilelement 26 in die Aufnahme 25 eines starren Querelements 24 seitlich eingeschoben und durch die Federkraft der Verengung kraftschlüssig gehalten werden. Auf diese Weise kann der Kontakt zum Untergrund beeinflusst und je nach Anwendungsfall eingestellt werden. Beispielsweise können für eine Fahrt auf einer betonierten Straße elastomere Profilelemente 26 verwendet werden, um den Untergrund zu schonen. Für den Einsatz im Gelände können alternativ Profilelemente 26 aus Stahl oder dergleichen verwendet werden, um die Haftung auf dem Untergrund bzw. den Eingriff in den Untergrund zu erhöhen. Auch können verschiedene Profilelemente 26 miteinander kombiniert werden.

### Bezugszeichenliste (Teil der Beschreibung)

- A: Laufrichtung bzw. Bewegungsrichtung des Fahrzeugs

- X: Längsrichtung
- Y: Querrichtung; Breite
- Z: vertikale Richtung; Höhe

- 1: Räder eines Fahrwerks eines Fahrzeugs; Gummireifen; Gummiluftreifen

- 2: Fahrwerkkette; Fahrwerkband; Bogie-Kette; Bogie-Band
- 20: flexibler Körper; elastomerer Körper
- 21: Zugträger; Stahlseile; Aramid-Seile; flächiges Gebilde; Gewebeeinlage
- 22: innere Profilierung
- 23: Verbindungselement; Schloss
- 24: starre Querelemente; Querversteigungselemente; Querstreben
- 25: Aufnahme eines Querelements 24
- 26: elastomere Profilelemente

## Patentansprüche

1. Fahrwerkkette (2), insbesondere Bogie-Kette (2), mit
einem flexiblen Körper (20), vorzugsweise einem elastomeren Körper (20), welcher in einer Laufrichtung (A) endlos geschlossen oder endlos schließbar ist,
wobei der flexible Körper (20) wenigstens einen Zugträger (21), vorzugsweise eine Mehrzahl von Zugträgern (21), aufweist, welcher sich in der Laufrichtung (A) erstreckt und mit dem flexiblen Körper (20) in einer Laufrichtung (A) endlos geschlossen oder endlos schließbar ist,
wobei eine Mehrzahl von starren Querelementen (24), welche mit der Außenseite des flexiblen Körpers (20) verbunden sind und sich im Wesentlichen quer zur Laufrichtung (A) erstrecken,
**dadurch gekennzeichnet, dass** zumindest ein Teil der starren Querelemente (24), vorzugsweise alle starren Querelemente (24), in Laufrichtung (A) derart nahe aneinander angeordnet sind, dass sich zwei unmittelbar benachbarte starre Querelemente (24) bei einer flächigen Erstreckung des flexiblen Körpers (20) in der Laufrichtung (A) berühren.

2. Fahrwerkkette (2) nach Anspruch 1, **dadurch gekennzeichnet, dass** zumindest ein Teil der starren Querelemente (24), vorzugsweise alle starren Querelemente (24), in Laufrichtung (A) lückenlos aneinander gereiht mit der Außenseite des flexiblen Körpers (20) verbunden ist.

3. Fahrwerkkette (2) nach Anspruch 1 oder 2, **dadurch gekennzeichnet, dass**
die einzelnen starren Querelemente (24) jeweils in der Laufrichtung (A) derart kurz ausgebildet sind, dass die Fahrwerkkette (2) um ein Fahrwerk (1) eines Fahrzeugs herumgebogen werden kann.

4. Fahrwerkkette (2) nach einem der vorherigen Ansprüche, **dadurch gekennzeichnet, dass**
zumindest ein Teil der starren Querelemente (24), vorzugsweise alle starren Querelemente (24), stoffschlüssig, vorzugsweise durch Vulkanisation, mit der Außenseite des flexiblen Körpers (20) verbunden ist.

5. Fahrwerkkette (2) nach einem der vorherigen Ansprüche, **dadurch gekennzeichnet, dass**
zumindest ein Teil der starren Querelemente (24), vorzugsweise alle starren Querelemente (24), kraftschlüssig, vorzugsweise durch Bolzen, Nieten oder Schrauben, mit der Außenseite des flexiblen Körpers (20) verbunden ist.

6. Fahrwerkkette (2) nach einem der vorherigen Ansprüche, **dadurch gekennzeichnet, dass**
zumindest ein Teil der starren Querelemente (24), vorzugsweise alle starren Querelemente (24), formschlüssig, vorzugsweise durch Einschieben quer zur Laufrichtung (A), mit der Außenseite des flexiblen Körpers (20) verbunden ist.

7. Fahrwerkkette (2) nach Anspruch 6, **dadurch gekennzeichnet, dass**
die formschlüssige Verbindung durch ein Nut-Feder-System, vorzugsweise durch eine Schwalbenschwanzverzahnung, bewirkt werden kann, welches die Außenseite des flexiblen Körpers (20) und die Innenseite des starren Querelements (24) miteinander ausbilden.

8. Fahrwerkkette (2) nach einem der vorherigen Ansprüche, **dadurch gekennzeichnet, dass**
der Zugträger (21) in ein elastomeres Material des flexiblen Körpers (20) eingebettet ist.

9. Fahrwerkkette (2) nach Anspruch 8, **dadurch gekennzeichnet, dass**
der Zugträger (21) ein Seil (21), vorzugsweise ein Stahlseil (21), ein Glasfaserseil (21) oder ein Aramidseil (21), ist.

10. Fahrwerkkette (2) nach Anspruch 8, **dadurch gekennzeichnet, dass**
der Zugträger (21) ein flächiges Gebilde, vorzugweise einlagiges oder mehrlagiges flächiges Gewebe (21), besonders vorzugsweise ein flächiges textiles Gewebe (21), ist,
welches vorzugsweise aus Stahl, aus Glasfaser, aus Kunstfaser, aus Naturfaser oder aus Aramidfaser oder aus einer Kombination hiervon besteht.

11. Fahrwerkkette (2) nach einem der Ansprüche 8 bis 10, **dadurch gekennzeichnet, dass**
der Zugträger (21) über die gesamte Breite (Y) der Fahrwerkkette (2) ausgebildet ist, oder dass
der Zugträger (21) lediglich über einen Teil der Breite (Y) der Fahrwerkkette (2) ausgebildet ist,
wobei vorzugsweise wenigstens ein Randbereich in Querrichtung (Y), besonders bevorzugt beide Randbereiche in Querrichtung (Y), frei von Zugträgern (21) ausgebildet ist.

12. Fahrwerkkette (2) nach einem der vorherigen Ansprüche, **dadurch gekennzeichnet, dass**
der flexible Körper (20) auf seiner Innenseite zumindest abschnittsweise in Querrichtung (Y) und/oder in Laufrichtung (A), vorzugsweise vollständig umlaufend in Laufrichtung (A), eine innere Profilierung (22) aufweist,
wobei die innere Profilierung (22) vorzugsweise einstückig mit einem elastomeren Material des flexiblen Körpers (20) ausgebildet ist.

13. Fahrwerkkette (2) nach einem der vorherigen Ansprüche, **dadurch gekennzeichnet, dass**
wenigstens ein starres Querelemente (24), vorzugsweise alle starren Querelemente (24), aus Metall, vorzugsweise aus Aluminium oder Stahl, besteht, und/oder dass wenigstens ein starres Querelemente (24), vorzugsweise alle starren Querelemente (24), ein Metall, vorzugsweise Aluminium oder Stahl, oder einen glasfaserverstärkten Kunststoff aufweist, welcher zumindest abschnittsweise, vorzugsweise vollständig, in ein elastomeres Material eingebettet ist.

14. Fahrwerkkette (2) nach einem der vorherigen Ansprüche, **dadurch gekennzeichnet, dass**
wenigstens ein starres Querelemente (24), vorzugsweise alle starren Querelemente (24), eine nach außen zeigende Aufnahme (25) aufweist, welche ausgebildet ist, ein Profilelement (26) aufzunehmen und kraftschlüssig und/oder formschlüssig zu halten.

15. Fahrwerkkette (2) nach Anspruch 14, **dadurch gekennzeichnet, dass** wenigstens ein starres Querelement (24), vorzugsweise alle starren Querelemente (24), ein Profilelement (26) aufweist,
wobei das Profilelement (26) entweder elastisch, vorzugsweise aus einem elastomeren Material, oder starr, vorzugsweise aus Metall, besonders bevorzugt aus Stahl oder Aluminium, oder aus glasfaserverstärktem Kunststoff, ausgebildet ist.

## Claims

1. Running gear chain (2), in particular bogie chain (2), having
a flexible body (20), preferably an elastomer body (20), which is closed in endless fashion, or closable in endless fashion, in a running direction (A),
wherein the flexible body (20) has at least one tension member (21), preferably a multiplicity of tension members (21), which extends/extend in the running direction (A) and is/are closed in endless fashion, or closable in endless fashion, with the flexible body (20) in a running direction (A),
wherein
a multiplicity of rigid transverse elements (24) which are connected to the outer side of the flexible body (20) and which extend substantially transversely with respect to the running direction (A),
**characterized in that** at least some of the rigid transverse elements (24), preferably all of the rigid transverse elements (24), are arranged so close together in the running direction (A) that, with a planar extent of the flexible body (20), two immediately adjacent rigid transverse elements (24) make contact in the running direction (A).

2. Running gear chain (2) according to Claim 1,
**characterized in that**
at least some of the rigid transverse elements (24), preferably all of the rigid transverse elements (24), are connected to the outer side of the flexible body (20) so as to be rowed up in the running direction (A) without intervals.

3. Running gear chain (2) according to Claim 1 or 2,
**characterized in that**
the individual rigid transverse elements (24) are each designed to be short in the running direction (A) such that the running gear chain (2) can be bent around running gear (1) of a vehicle.

4. Running gear chain (2) according to one of the preceding claims, **characterized in that**
at least some of the rigid transverse elements (24), preferably all of the rigid transverse elements (24), are connected to the outer side of the flexible body (20) in an integrally bonded manner, preferably by vulcanization.

5. Running gear chain (2) according to one of the preceding claims, **characterized in that**
at least some of the rigid transverse elements (24), preferably all of the rigid transverse elements (24), are connected to the outer side of the flexible body (20) in a force-fitting manner, preferably by bolts, rivets or screws.

6. Running gear chain (2) according to one of the preceding claims, **characterized in that**
at least some of the rigid transverse elements (24), preferably all of the rigid transverse elements (24), are connected to the outer side of the flexible body (20) in a form-fitting manner, preferably by insertion transversely with respect to the running direction (A).

7. Running gear chain (2) according to Claim 6,
**characterized in that**
the form-fitting connection can be achieved by a tongue and groove system, preferably by a dovetail toothing, which form the outer side of the flexible body (20) and the inner side of the rigid transverse element (24) with one another.

8. Running gear chain (2) according to one of the preceding claims, **characterized in that**
the tension member (21) is embedded into an elastomer material of the flexible body (20).

9. Running gear chain (2) according to Claim 8,
**characterized in that**
the tension member (21) is a cable (21), preferably a steel cable (21), a glass fiber cable (21) or an aramid cable (21).

10. Running gear chain (2) according to Claim 8,
**characterized in that**
the tension member (21) is a sheetlike structure, preferably a single-layer or multilayer sheetlike woven fabric (21), particularly preferably a sheetlike textile woven fabric (21),
which preferably consists of steel, of glass fiber, of synthetic fiber, of natural fiber or of aramid fiber or of a combination thereof.

11. Running gear chain (2) according to one of Claims 8 to 10, **characterized in that**
the tension member (21) is formed over the entire width (Y) of the running gear chain (2), or **in that**
the tension member (21) is formed only over part of the width (Y) of the running gear chain (2),
wherein preferably at least one edge region in the transverse direction (Y), particularly preferably both edge regions in the transverse direction (Y), is/are formed free of tension members (21).

12. Running gear chain (2) according to one of the preceding claims, **characterized in that**
the flexible body (20) has an inner profiling (22) on its inner side at least partially in the transverse direction (Y) and/or in the running direction (A), preferably completely running around in the running direction (A), wherein the inner profiling (22) is preferably formed in one piece with an elastomer material of the flexible body (20) .

13. Running gear chain (2) according to one of the preceding claims, **characterized in that**
at least one rigid transverse element (24), preferably all of the rigid transverse elements (24), consists/consist of metal, preferably of aluminum or steel, and/or **in that**
at least one rigid transverse element (24), preferably all of the rigid transverse elements (24), contains/contain a metal, preferably aluminum or steel, or a glass-fiber-reinforced plastic which is at least partially, preferably completely, embedded into an elastomer material.

14. Running gear chain (2) according to one of the preceding claims, **characterized in that**
at least one rigid transverse element (24), preferably all of the rigid transverse elements (24), has/have an outwardly pointing receptacle (25) which is designed to receive a profiled element (26) and to hold it in a force-fitting and/or form-fitting manner.

15. Running gear chain (2) according to Claim 14,
**characterized in that**
at least one rigid transverse element (24), preferably all of the rigid transverse elements (24), has/have a profiled element (26),
wherein the profiled element (26) is either formed elastically, preferably from an elastomer material, or rigidly, preferably from metal, particularly preferably from steel or aluminum, or from glass-fiber-reinforced plastic.

## Revendications

1. Chenille de châssis (2), en particulier chenille de bogie (2), comprenant
un corps flexible (20), de préférence un corps élastomère (20), qui est ou peut être fermé en continu dans un sens de marche (A),
le corps flexible (20) présentant au moins un tirant (21), de préférence une pluralité de tirants (21), qui s'étend dans le sens de marche (A) et est ou peut être fermé en continu avec le corps flexible (20) dans un sens de marche (A),
une pluralité d'éléments transversaux rigides (24) qui sont reliés à la face extérieure du corps flexible (20) et qui s'étendent substantiellement transversalement au sens de marche (A),
**caractérisée en ce qu'**au moins une partie des éléments transversaux rigides (24), de préférence tous les éléments transversaux rigides (24), sont disposés à proximité les uns des autres dans le sens de marche (A) de telle sorte que deux éléments transversaux rigides (24) directement voisins entrent en contact si le corps flexible (20) s'étend à plat dans le sens de marche (A) .

2. Chenille de châssis (2) selon la revendication 1,
**caractérisée en ce qu'**au moins une partie des éléments transversaux rigides (24), de préférence tous les éléments transversaux rigides (24), sont reliés à la face extérieure du corps flexible (20) en étant juxtaposés sans espace dans le sens de marche (A).

3. Chenille de châssis (2) selon la revendication 1 ou 2, **caractérisée en ce que** les éléments transversaux rigides (24) individuels sont réalisés avec une longueur courte respectivement dans le sens de marche (A) de telle sorte que la chenille de châssis (2) peut être enroulée autour d'un châssis (1) d'un véhicule.

4. Chenille de châssis (2) selon l'une quelconque des revendications précédentes, **caractérisée en ce qu'**au moins une partie des éléments transversaux rigides (24), de préférence tous les éléments transversaux rigides (24), sont reliés par liaison de matière, de préférence par vulcanisation, à la face extérieure du corps flexible (20).

5. Chenille de châssis (2) selon l'une quelconque des revendications précédentes, **caractérisée en ce qu'**au moins une partie des éléments transversaux rigides (24), de préférence tous les éléments transversaux rigides (24), sont reliés par adhérence, de préférence par boulonnage, par rivetage ou par vissage, à la face extérieure du corps flexible (20).

6. Chenille de châssis (2) selon l'une quelconque des revendications précédentes, **caractérisée en ce qu'**au moins une partie des éléments transversaux rigides (24), de préférence tous les éléments transversaux rigides (24), sont reliés par complémentarité de forme, de préférence par insertion transversalement au sens de marche (A), à la face extérieure du corps flexible (20) .

7. Chenille de châssis (2) selon la revendication 6, **caractérisée en ce que** la liaison par complémentarité de forme peut être obtenue par un système à languette et rainure, de préférence par un assemblage en queue d'aronde, qui réalisent la face extérieure du corps flexible (20) et la face intérieure de l'élément transversal rigide (24) entre elles.

8. Chenille de châssis (2) selon l'une quelconque des revendications précédentes, **caractérisée en ce que** le tirant (21) est incorporé dans un matériau élastomère du corps flexible (20).

9. Chenille de châssis (2) selon la revendication 8,
**caractérisée en ce que** le tirant (21) est un câble (21), de préférence un câble en acier (21), un câble à fibres optiques (21) ou un câble en aramide (21).

10. Chenille de châssis (2) selon la revendication 8,
**caractérisée en ce que** le tirant (21) est une structure à plat, de préférence un tissu (21) à plat monocouche ou multicouche, de plus grande préférence un tissu textile à plat (21), qui est composé de préférence d'acier, de fibres de verre, de fibres synthétiques, de fibres naturelles ou de fibres d'aramide ou d'une combinaison de celles-ci.

11. Chenille de châssis (2) selon l'une quelconque des revendications 8 à 10, **caractérisée en ce que** le tirant (21) est réalisé sur toute la largeur (Y) de la chenille de châssis (2), ou **en ce que** le tirant (21) est réalisé uniquement sur une partie de la largeur (Y) de la chenille de châssis (2), dans laquelle de préférence au moins une zone de bord dans la direction transversale (Y) est réalisée sans tirants (21), de plus grande préférence les deux zones de bord dans la direction transversale (Y) sont réalisées sans tirants (21).

12. Chenille de châssis (2) selon l'une quelconque des revendications précédentes, **caractérisée en ce que** le corps flexible (20) présente sur sa face intérieure au moins par endroits dans la direction transversale (Y) et/ou dans le sens de marche (A), de préférence de manière complètement périphérique dans le sens de marche (A), un profilage intérieur (22), le profilage intérieur (22) étant de préférence réalisé d'un seul tenant avec un matériau élastomère du corps flexible (20) .

13. Chenille de châssis (2) selon l'une quelconque des revendications précédentes, **caractérisée en ce qu'**au moins un élément transversal rigide (24), de préférence tous les éléments transversaux rigides (24), sont composés de métal, de préférence d'aluminium ou d'acier, et/ou **en ce qu'**au moins un élément transversal rigide (24), de préférence tous les éléments transversaux rigides (24), présentent un métal, de préférence de l'aluminium ou de l'acier, ou une matière plastique renforcée en fibres de verre qui est incorporée au moins par endroits, de préférence entièrement, dans un matériau élastomère.

14. Chenille de châssis (2) selon l'une quelconque des revendications précédentes, **caractérisée en ce qu'**au moins un élément transversal rigide (24), de préférence tous les éléments transversaux rigides (24), présentent un logement (25) tourné vers l'extérieur qui est réalisé pour recevoir et maintenir par adhérence et/ou par complémentarité de forme un élément profilé (26).

15. Chenille de châssis (2) selon la revendication 14, **caractérisée en ce qu'**au moins un élément transversal rigide (24), de préférence tous les éléments transversaux rigides (24), présentent un élément profilé (26), l'élément profilé étant réalisé soit de manière élastique, de préférence d'un matériau élastomère, soit de manière rigide, de préférence en métal, de plus grande préférence en acier ou en aluminium, ou en matière plastique renforcée en fibres de verre.
